# EUROPEAN PATENT APPLICATION

(11) **EP 4 821 903 A1**
(43) Date of publication of application: **14.10.2026**
(21) Application number: 25168851.1
(22) Date of filing: 07.04.2025
(51) Int. Cl.: C04B 28/00, C04B 111/28, C04B 111/20

(54) **GEOPOLYMERIC COATING FOR WEAR PROTECTION OF METAL SURFACES**

(71) Applicant: Henkel AG & Co. KGaA, 40589 Düsseldorf (DE)
(72) Inventor: Sarcina, Fabio, 20125 Milan (IT); Salmoiraghi, Eleonora, 20018 Sedriano (MI) (IT); Signorile, Marco, 27010 Vellezzo Bellini (IT)

(57) **Abstract**

The present invention relates to a coating based on geopolymer binder comprising at least one geopolymer binder, containing a silico-aluminate precursor and an alkaline reagent solution, and at least one first aggregate comprising a phyllosilicate, preferably mica; a method for attaining this coating and the use of this coating as wear protection of metal surfaces, preferably of industrial equipment.

## Description

The present invention relates to a coating based on geopolymer binder comprising at least one geopolymer binder, containing a silico-aluminate precursor and an alkaline reagent solution, and at least one first aggregate comprising a phyllosilicate, preferably mica; a method for attaining this coating and the use of this coating as wear protection of metal surfaces, preferably of industrial equipment.

Industrial equipment is often subject of wearing phenomenon during their service life due to the exposure to harsh conditions like contact with aggressive chemicals, high temperatures, thermal shocks, continuous contact with abrasive/erosive materials. To protect the equipment and extend its service life, organic protective coatings are generally applied to the impacted surfaces. Such coatings can be applied on field and cured at room temperature within few days or need to be cured at higher temperatures to guarantee a sufficient protection. These coatings are based on organic technologies, like epoxy, polyurethane, polyurea formulations, and these are normally not able to withstand temperatures higher than 200°C-300°C in dry conditions. Under wet conditions the maximum operating temperature usually drops dramatically.

To extend the service temperature of epoxy-based coatings the usage of aromatic starting monomers could be exploited, or the addition of fillers, which are able to support the polymeric matrix against temperature increase, could be tried, but all these approaches are not successful when temperatures exceed approximately 250°C.

Silicones can withstand higher temperatures, up to 700°C, but they're soft and not strong enough to survive, for example, to highly abrasive environment. Moreover, silicones require a high temperature to cure or a post-curing processes to be able to reach their full performance level.

Additionally, part of the ingredients used to formulate organic coatings show health and safety concerns during the product handling as well as environmental risks related to their usage or disposal. For example, epoxy-based coatings are negatively impacted by the presence of amines and/or phenol derivatives or silicones often contain solvents that pose a risk for the operators and the environment.

The problem to be solved by the present invention is finding a protective coating that can withstand higher temperatures, provide effective wear protection, and minimize health and environmental risks. Such a solution would ensure the extended service life of industrial equipment while addressing the current shortcomings of silicone, epoxy, polyurethane, and polyurea formulations. At the same time the coating should have good adhesion to metal surfaces.

This problem is solved by coating based on geopolymer binder according to the present invention. The coating based on geopolymer binder comprises
- at least one geopolymer binder containing:
   - a silico-aluminate precursor, preferably metakaolin, in a quantity comprised between 50 and 85 % by weight with respect to the geopolymer binder;
   - an alkaline reagent solution in a quantity comprised between 15 and 50 % by weight with respect to the geopolymer binder, intended to react with said precursor and comprising a silicate compound selected from among a sodium silicate, a potassium silicate, a lithium silicate and mixtures or compounds thereof; and
- at least one first aggregate comprising a phyllosilicate, preferably mica.

The coating of the present invention provides superior properties compared to conventional coatings based on organic formulations. The coating is able to cure rapidly without additional heat at a temperature range of 10 - 35°C, with appreciable performance development within 24 hours of application, ensuring efficient room temperature fast curing. But the coating shows high temperature resistance and maintains its performance at temperatures up to 600-800°C, making it highly suitable for high-temperature applications.

Due to the comprised mica the coating provides strong adhesion to metal, achieving an outstanding lap shear adhesion on grit-blasted steel, even under harsh conditions such as rusted surfaces, high temperatures (300°C), and aging at high temperatures like 800°C. This also includes an excellent thermal shock resistance relating to usage of mica in this coating. It can withstand significant temperature changes, from -15°C to 200°C, without cracking or damage. Therefore, the coating can even be used in thin film applications and is still able to protect the substrate from chemical attacks and corrosion, ensuring chemical resistance and corrosion protection, since the coating shows no cracks or porosity.

Furthermore, the coating is environmentally and health-safe, as it is free from harmful substances such as CMR, SVHC, PFAS, APEO, and other toxic substances. It is compatible with various conditions, being non-sensitive to both acidic and alkaline environments.

A further embodiment of the invention is a method for attaining a coating based on geopolymer binder comprising:
- a step of arranging:
   - a silico-aluminate precursor;
   - a silicate compound selected from a sodium silicate, a potassium silicate, lithium silicate and mixtures or compounds thereof;
   - a solvent, preferably water;
   - optionally a base, preferably potassium hydroxide;
   - at least one first aggregate comprising a phyllosilicate, preferably mica; and
   - optionally further aggregates, like thickener, abrasion resistant material, mineral accelerator or additional fillers;
- a first step of mixing said silicate compound with said solvent in order to obtain a reagent solution;
- a second step of mixing said reagent solution with said precursor in order to obtain a geopolymer binder; and
- a third step of mixing said geopolymer binder with said first aggregate and optional further aggregates in order to obtain a coating based on geopolymer binder;
wherein in said second mixing step said precursor and said reagent solution are mixed in a proportion by weight comprised between 50:50 and 85:15.

Another embodiment of the invention of the use of the coating based on geopolymer-binder as mentioned herein as wear protection of metal surfaces, preferably of industrial equipment.

The expression "coating based on geopolymer binder" is to be understood, according to the invention, as a coating which comprises at least one geopolymer binder.

In particular, the expression "geopolymer binder" advantageously refers to a binder of mineral origin comprising a precursor and a reagent solution comprising a hardening compound dissolved in water and intended to react with the precursor. In particular, when the precursor is mixed with the reagent solution, the mineral compounds which constitute them give rise to mineral polymerization reactions which form chains or lattices of mineral molecules bound by covalent bonds. In general, the here use reagent solution of a geopolymer binder is basic (with a pH of approximately 12-14), depending on the hardening compound used. Furthermore, the precursor and the hardener can be of different types, for example the precursor can be a natural amorphous aluminosilicate or derived from industrial waste (class F fly ash or blast furnace slag) or amorphous microsilica, while the hardener can be an alkaline silicate compound with a sodium or potassium base (in the event of geopolymerization in a basic environment). Generally, the geopolymerization reactions which cause the binder to harden, occur at room temperature or regardless not higher than 100°C at relatively rapid speeds.

Advantageously, since water does not participate in the aforesaid reactions, geopolymerization is not a hydraulic process and therefore it is not necessary to use large quantities of extra water (the addition is performed only to regulate processability), as it is sufficient to use the bare minimum to obtain good processability. Therefore, the materials known by the name of activated alkalis, which are obtained starting from a strongly alkaline activating solution (with pH even up to 14), will not be intended as geopolymer binders. In fact, an activation of this type leads to disordered condensation and the formation of hydrated minerals in the binder.

The coating based on a geopolymer is in particular applied in a fluid, semi-fluid or creamy form and is intended to harden following the application to the surface, preferably in a fluid form. In a preferred embodiment, the coating is applied by spraying, especially to metal surfaces.

According to the invention, the aforesaid geopolymer binder contains an silico-aluminate precursor, preferably an amorphous silico-aluminate precursor.

In particular, the precursor is present in a quantity comprised between 50 and 85% by weight, preferably between 55 and 80% by weight, more preferably between 60 and 70% by weight with respect to the geopolymer binder.

The term "precursor" is to be understood as a material capable of taking part in a chemical reaction, in this case geopolymerization, to bind with other particles, in particular with a hardener which will be described below, forming a single compound. Preferably, the precursor comprises metakaolin. Thereby, advantageously, the precursor does not need, in its production, to be subjected to extremely high temperatures, requiring less energy consumption with respect to that of a hydraulic binder, since the calcination temperature of a kaolin to transform mineralogically into metakaolin is 750°C. Therefore, the metakaolin is preferably obtained by calcination between 750 and 1150°C and subsequent micronization. In particular, the metakaolin (or more generally the precursor) has a D97 grain size less than 150 µm, preferably less than 100 µm and even more preferably less than 50 µm. The index "D97" means that 97% by weight of the particles have a size lower than that indicated. The analysis is typically performed by sieve analysis.

Advantageously, the precursor further comprises at least one accelerating compound. For example, the accelerating compound can consist of steelworks discard minerals and/or slag, preferably in mineralogical and grain size equilibrium with the metakaolin. The expression "grain size equilibrium" means that such an accelerating compound has a grain size substantially compatible with that of metakaolin, while the expression "mineralogical balance" means that such an accelerating compound substantially has a mineralogical composition complementary to metakaolin.

Thereby, the metakaolin and the accelerating compound advantageously cannot be distinguished when they are mixed together, as they are minerals with an amorphous structure.

According to the invention, the geopolymer binder also contains a reagent solution, preferably liquid, which is intended to react with the precursor and comprises a silicate compound.

The expression "reagent solution" means a solution with a hardening effect capable of reacting with the precursor to bind therewith, forming a single geopolymer binder. Preferably, the silicate compound is selected from among a sodium silicate, a potassium silicate, a lithium silicate and mixtures or compounds thereof; Preferably, the silicate compound is potassium silicate.

In more detail, the reagent solution comprises a solvent, preferably water, in which the aforesaid silicate compound is dissolved. Advantageously, the silicate compound is present in a quantity comprised between 35 and 50% by weight with respect to the reagent solution, preferably between 40 and 45%. Perferalby, the concentration of the silicate compound in the precursor is from 0.5 to 3 mol/l, more preferably from 1 to 2.5 mol/l, most preferably from 1.5 to 2 mol/l.

Furthermore, the alkaline reagent contains at least one base, especially a hydroxide. Preferably the base is selected from alkali hydroxides and alkaline earth metal hydroxides, like lithium hydroxide, sodium hydroxide, potassium hydroxide, magnesium hydroxide and calcium hydroxide. More preferably the alkaline reagent comprises sodium hydroxide and/or potassium hydroxide, most preferably potassium hydroxide.

In a preferred embodiment, the alkaline reagent solution has a pH-value of above 12, more preferably of above 13, most preferably between 13.5 and 14.

In particular, the reagent solution is present in a quantity comprised between 15 and 50 % by weight, preferably between 20 and 55% by weight, most preferably between 30 and 40 % by weight with respect to the geopolymer binder.

Advantageously, with the precursor and the reagent solution in freely selected quantities within the indicated ranges, a geopolymer binder is obtained with an excellent compromise between mechanical properties and yield.

For example, using a precursor comprising metakaolin with a D97 grain size lower than 4 µm, a greater quantity of silicate compound and therefore of reagent solution is required. In fact, in this case the specific surface of the metakaolin increases and therefore the reactivity and the bonds which it can form with the silicate compound increase. Thereby, a coating capable of achieving excellent mechanical properties is obtained, and yet not only more expensive, due to the cost of the raw materials, but also much stickier, with a lower yield.

Otherwise, it is possible to attain sufficiently high mechanical properties with a metakaolin with a higher grain size and therefore less expensive and with a lower quantity of silicate compound.

Advantageously, the sum of the quantity of precursor and the quantity of reagent solution constitutes at least 90%, and preferably substantially 100%, of the geopolymer binder.

Advantageously, the coating is antibacterial and anti-mold thanks to the basicity of the geopolymer binder both before and after hardening.

Preferably, the geopolymer binder is present in a quantity comprised between 50 and 85% by weight, preferably between 55 and 80% by weight, more preferably between 60 and 70% by weight with respect to the coating.

Furthermore, the coating comprises at least a first aggregate comprising a phyllosilicate, preferably mica, more preferably muscovite. The first aggregate is preferably used in a quantity between 1 and 60% by weight with respect to the coating, more preferably 5 to 50 % by weight, most preferably 15 to 35 % by weight.

Phyllosilicates are minerals that are made of silicate tetrahedrons that are arranged in sheets. They are also known as sheet silicates or layer silicates. The phyllosilicate can be selected from micas, chlorite, serpentine, talc, and the clay minerals. Preferably, the coating comprises as first aggregate at least one mica. The most common types of mica are muscovite and biotite, with the general formula KAl₂(AlSi₃O₁₀)(OH)₂ for muscovite and K(Mg,Fe)₃(AlSi₃O₁₀)(OH)₂ for biotite. More preferably the coating comprises as first aggregate muscovite.

In fact, it has been surprisingly found that the addition of mica as an aggregate within the geopolymer binder improves the adhesion of the coating itself, especially to metal surfaces and in particular improves the thermal shock properties.

Advantageously, the coating based on geopolymer binder has excellent mechanical features, comparable or superior to those obtained with the use of other binders or organic coatings.

By means of the combination of the geopolymer binder and mica, it is therefore possible to make a durable material, resistant both mechanically and to chemical and thermal attacks, more effectively usable, in particular for metal surfaces in the industrial sector but not limited thereto. Furthermore, the material obtained from the hardening of the coating is advantageously light and has a pleasant appearance. Furthermore, the material obtained from the hardening of the coating is advantageously easy to dispose of since it is chemically inert and not dangerous for the environment, nor toxic or harmful.

Advantageously, the mica contained in the first aggregate is in the form of powder with grain size dimensions less than or equal to 300 µm and preferably less than or equal to 200 µm, more preferably less than or equal to 150 µm.

In particular, the powdered mica with a grain size less than or equal to 150 µm is sieved mica.

Preferably, mica, preferably muscovite, is used in a quantity between 1 and 15% by weight with respect to the coating, more preferably 2 to 10 % by weight, more preferably 3 to 7 % by weight. In another embodiment, mica, preferably muscovite, is used in a quantity between 10 and 30% by weight with respect to total amount of all aggregates, more preferably 15 to 25 % by weight.

Beside the first aggregate the coating composition can contain various other aggregates, like a spheroid sand, a micronized glass, a zeolite, thickener, abrasion resistant material, mineral accelerator or additional fillers. Advantageously, the coating comprises at least one additional aggregate comprising at least one, and preferably more than one, from among: spheroid sand, a micronized glass, a zeolite, thickener, abrasion resistant material, mineral accelerator or additional fillers, especially from thickener, abrasion resistant material, mineral accelerator or additional fillers.

In one embodiment, the coating comprises as further aggregate a thickener, preferably sepiolite. Preferably, the thickener, preferably sepiolite, is used in a quantity between 0 and 2 % by weight with respect to the coating, more preferably 0.5 to 1.5 % by weight. In another embodiment, the thickener, preferably sepiolite is used in a quantity between 0 and 7% by weight with respect to total amount of aggregates, more preferably 0.5 to 3 % by weight. In another embodiment, the coating is substantially free of sepiolite, preferably a thickener.

The present compositions are defined herein as being "substantially free" of certain compounds, elements, ions or other like components. The term "substantially free" is intended to mean that the compound, element, ion or other like component is not deliberately added to the composition and is present, at most, in only trace amounts which will have no (adverse) affect on the desired properties of the coating. An exemplary trace amount is less than 1000 ppm by weight of the composition. The term "substantially free" encompasses those embodiments where the specified compound, element, ion, or other like component is completely absent from the composition or is not present in any amount measurable by techniques generally used in the art.

The thickener, preferably sepiolite, preferably has a grain size dimension of less than or equal to 200 µm and preferably less than or equal to 150 µm, more preferably less than or equal to 50 µm

In one embodiment, the coating comprises as further aggregate an abrasion resistance mineral, preferably albite and/or alumina. The usage of an abrasion resistance mineral is especially beneficial to enhance the wear protection under harsh conditions, e.g. if the coating is exposed to extensive friction. Preferably, the abrasion resistance mineral, preferably albite and/or alumina, is used in a quantity between 1 and 40 % by weight with respect to the coating, more preferably 5 to 30 % by weight, more preferably 8 to 20 % by weight. In another embodiment, the abrasion resistance mineral, preferably albite and/or alumina, is used in a quantity between 15 and 80% by weight with respect to total amount of aggregates, more preferably 20 to 60 % by weight, most preferably 30 to 50 % by weight.

The abrasion resistance mineral, preferably albite and/or alumina, preferably has a grain size dimension of less than or equal to 200 µm and preferably less than or equal to 150 µm, more preferably less than or equal to 70 µm.

In another embodiment, the coating comprises as further aggregate a mineral accelerator, like natural belite cement or an iron rich mineral. Preferably, the mineral accelerator is used in a quantity between 0 and 5 % by weight with respect to the coating, more preferably 0.5 to 2 % by weight. In another embodiment, mineral accelerator is used in a quantity between 0 and 20% by weight with respect to total amount of aggregates, more preferably 0.5 to 10 % by weight. In another embodiment, the coating is substantially free of mineral accelerator.

In a further embodiment, the coating comprises as further aggregate wollastonite. Preferably, wollastonite is used in a quantity between 0 and 20 % by weight with respect to the coating, more preferably 2 to 15 % by weight, more preferably 5 to 12 % by weight. In another embodiment, wollastonite is used in a quantity between 0 and 50% by weight with respect to total amount of aggregates, more preferably 10 to 40 % by weight.

The coating based on geopolymer binder comprises
- at least one geopolymer binder containing:
   - a silico-aluminate precursor, preferably metakaolin, in a quantity comprised between 50 and 85 % by weight with respect to the geopolymer binder;
   - an alkaline reagent solution in a quantity comprised between 15 and 50 % by weight with respect to the geopolymer binder, intended to react with said precursor and comprising a silicate compound selected from among a sodium silicate, a potassium silicate, a lithium silicate and mixtures or compounds thereof, and preferably comprising at least one base, like a hydroxide, especially potassium hydroxide;
- at least one first aggregate comprising a phyllosilicate, preferably mica, more preferably muscovite, preferably in an amount as mentioned above;
- optionally at least one second aggregate comprising a thickener, preferably sepiolite, preferably in an amount as mentioned above;
- optionally at least one third aggregate comprising abrasion resistance mineral, preferably albite, preferably in an amount as mentioned above;
- optionally at least one fourth aggregate comprising a mineral accelerator, like natural belite cement or an iron rich mineral, preferably in an amount as mentioned above;
- optionally at least one fifth aggregate comprising wollastonite, preferably in an amount as mentioned above

In a preferred embodiment, the total amount of all aggregate together is preferably in a quantity between 1 and 70% by weight with respect to the coating, more preferably 5 to 60 % by weight, most preferably 10 to 50 % by weight, even more preferable 15 to 40 % by weight.

In a preferred embodiment the coating has a thickness of 0.1 to 1.5 mm, more preferably 0.3 to 1 mm.

Furthermore, according to the use and the viscosity to be obtained, the coating can comprise an extra quantity of water (more than that contained in the reagent solution) comprised between 2 and 6% by weight with respect to the coating.

Advantageously, the coating further comprises at least one mineral oil, in particular to make the powders heavier and to avoid the dispersion thereof in air. Preferably, the mineral oil is present in a quantity comprised between 0.5 and 1.5% by weight with respect to the coating.

Advantageously, the coating comprises at least one air-entraining additive, in particular a surfactant. It is thereby advantageously possible to incorporate air inside the coating, in particular the geopolymer binder, for example to favor the oxidation of the precursor in the geopolymer binder and/or decrease the density of the coating.

Preferably, the air-entraining additive is present in a quantity less than 1% by weight with respect to the coating, preferably less than 0.5%, even more preferably about 0.1%. Some examples of coating compositions are given below with reference to particular applications on different surfaces.

As an example, a coating based on geopolymer binder with superior wear resistance for a metal surface can be gained by mixing metakaolin as a precursor and a water based potassium silicate solution as reagent (pH 13.8) in a ratio of precursor to reagent of 1.7. To this geopolymer binder, based on the total amount of the coating, 5 % by weight of muscovite, 8,5 % by weight of albite and 9.5 % by weight of wollastonite are added by mixing. This coating composition could be applied to metal surfaces gaining thin films with a thickness of 0.7 mm and are cured at room temperature. The coating provided an outstanding lap shear adhesion on grit-blasted steel of around 6 MPa. This property could even be maintained after heat treatment (800°C for one week), under heat (like 300°C during testing) or with rusted steel surfaces. Additionally, the coating should excellent thermal shock resistance. After leaving the coated substrate at -15°C for 1 hour and afterwards immediately placing it into an oven with 200°C for 4 hours, no cracking, delamination or damage can be observed.

## Claims

1. A coating based on geopolymer binder comprising:
- at least one geopolymer binder containing:
- a silico-aluminate precursor in a quantity comprised between 50 and 85% by weight with respect to the geopolymer binder;
- an alkaline reagent solution in a quantity comprised between 15 and 50% by weight with respect to the geopolymer binder, intended to react with said precursor and comprising a silicate compound selected from among a sodium silicate, a potassium silicate, a lithium silicate and mixtures or compounds thereof; and
- at least one first aggregate comprising at least one phyllosilicate.

2. Coating based on geopolymer binder according to claim 1, **characterized in that** the silico-aluminate precursor comprise metakaolin, preferably with a D97 grain size of less than 150 µm.

3. Coating based on geopolymer binder according to claim 1 or 2, **characterized in that** the alkaline reagent solution comprises a solvent, preferably water, and the silicate compound, preferably potassium silicate, in a concentration of 0.5 to 3 mol/l.

4. Coating based on geopolymer binder according to any one of the preceding claims, **characterized in that** the alkaline reagent solution comprises at least one base, especially a hydroxide, preferably potassium hydroxide.

5. Coating based on geopolymer binder according to any one of the preceding claims, **characterized in that** the alkaline reagent solution has a pH-value of above 12, more preferably of above 13, most preferably between 13.5 and 14.

6. Coating based on geopolymer binder according to any one of the preceding claims, **characterized in that** the coating comprises as first aggregate at least one mica, preferably muscovite, in a preferred amount of 1 and 15% by weight with respect to the coating.

7. Coating based on geopolymer binder according to any one of the preceding claims, **characterized in that** the coating comprises as further aggregate a thickener, preferably sepiolite, in a preferred amount of 0 and 2 % by weight with respect to the coating.

8. Coating based on geopolymer binder according to any one of the preceding claims, **characterized in that** the coating comprises as further aggregate an abrasion resistance mineral, preferably albite and/or alumina, in a preferred amount of 1 and 40 % by weight with respect to the coating.

9. Coating based on geopolymer binder according to any one of the preceding claims, **characterized in that** the coating comprises as further aggregate a mineral accelerator, like natural belite cement or an iron rich mineral, in a preferred amount of 0 and 5 % by weight with respect to the coating.

10. Coating based on geopolymer binder according to any one of the preceding claims, **characterized in that** the coating comprises as further aggregate wollastonite, in a preferred amount of 0 and 20 % by weight with respect to the coating.

11. Method for attaining a coating based on geopolymer binder comprising:
- a step of arranging:
- a silico-aluminate precursor;
- a silicate compound selected from a sodium silicate, a potassium silicate, lithium silicate and mixtures or compounds thereof;
- optionally a base, preferably potassium hydroxide;
- a solvent, preferably water;
- at least one first aggregate comprising a phyllosilicate, preferably mica; and
- optionally further aggregates, like thickener, abrasion resistant material, mineral accelerator or additional fillers;
- a first step of mixing said silicate compound with said solvent in order to obtain a reagent solution;
- a second step of mixing said reagent solution with said precursor in order to obtain a geopolymer binder; and
- a third step of mixing said geopolymer binder with said first aggregate and optional further aggregates in order to obtain a coating based on geopolymer binder;
wherein in said second mixing step said precursor and said reagent solution are mixed in a proportion by weight comprised between 50:50 and 85:15.

12. Method for attaining a coating based on geopolymer binder according to claim 11, wherein the coating based on geopolymer binder is according to any one of claims 2 to 10.

13. Use of the coating based on geopolymer-binder as mentioned herein as wear protection of metal surfaces, preferably of industrial equipment.
